# EUROPEAN PATENT SPECIFICATION

(11) **EP 3 880 007 B1**
(45) Date of publication and mention of the grant of the patent: **31.08.2022**
(21) Application number: 19794564.5
(22) Date of filing: 29.10.2019
(51) Int. Cl.: A23L 29/212, A23L 29/219, A23L 27/00, A23L 27/60

(54) **VINAIGRETTE**
VINAIGRETTE
VINAIGRETTE

(30) Priority: 13.11.2018 EP 18205807
(43) Date of publication of application: 22.09.2021
(73) Proprietor: Unilever IP Holdings B.V., 3013 AL Rotterdam (NL)
(72) Inventor: BOUMAN, Tjerk, 3133 AT Vlaardingen (NL); VAN GASTEL, Hubertus, Cornelis, 3133 AT Vlaardingen (NL)
(74) Representative: Fijnvandraat, Arnoldus
(86) International application number: PCT/EP2019/079469
(87) International publication number: WO 2020/099117

(56) References cited:
- WO-A1-2014/042537
- WO-A1-2017/046301
- WO-A1-2017/198485
- US-A- 2 338 083
- US-B1- 6 221 420
- DATABASE WPI Week 201205 Thomson Scientific, London, GB; AN 2012-A21430 XP002788672, & JP 5 854994 B2 (KEWPIE CORP) 9 February 2016 (2016-02-09)
- Anonymous: "novation 2300 - Google Search", , 22 February 2017 (2017-02-22), pages 1-1, XP055646798, Retrieved from the Internet: URL:https://www.google.com/search?q=novati on+2300&client=firefox-b-ab&source=lnt&tbs =cdr:1,cd_min:1/1/2000,cd_max:1/1/2019&tbm = [retrieved on 2019-11-27]
- Fabiana Perrechil ET AL: "Rheological and structural evaluations of commercial italian salad dressings", Ciência e Tecnologia de Alimentos, 2010, pages 477-482, XP055552479, DOI: 10.1590/S0101-20612010000200027 Retrieved from the Internet: URL:http://www.scielo.br/pdf/cta/v30n2/27. pdf [retrieved on 2019-02-06]
- G. Van Dalen: "Determination of the water droplet size distribution of fat spreads using confocal scanning laser microscopy", The Royal Microscopical Society Journal of Microscopy, vol. 208 2002, pages 116-133, XP055646969, Retrieved from the Internet: URL:https://onlinelibrary.wiley.com/doi/fu ll/10.1046/j.1365-2818.2002.01075.x [retrieved on 2019-11-27]
- DATABASE WPI Week 198652 Thomson Scientific, London, GB; AN 1986-341929 XP002788673, & JP H07 2763 B2 (NICHIDEN KAGAKU KK) 18 January 1995 (1995-01-18)

## Description

The present invention relates to a food composition comprising oil and water in the form of a dispersion. It further relates to a process to manufacture the food composition. The invention relates to the use of modified waxy starch in a food composition comprising water and vegetable oil to provide a phase-stable composition in the form of a dispersion.

### Introduction

Salad dressings are known in the art. They comprise oil and water and are in a common variety emulsified with the help of an emulsifier. Such an emulsifier is often egg. At low oil levels, gelatinised starch is often present to modify the texture and to prevent the emulsion to collapse which results in phase separation. A food-grade acid is normally present to assure microbial stability and to contribute to taste. US 6221420 B1 relates to foods containing thermally-inhibited starches and flours which are functionally equivalent to chemically inhibited starches. It discloses in some examples salad dressings with whole eggs and thermally inhibited starch. WO2017/198485 A1 discloses examples of emulsions with a low fat content, egg yolk and up to 4 wt% physically modified starch.

Another type of salad dressing is a vinaigrette-type of dressing. Oil droplets are not emulsified but dispersed in a water phase. The oil phase and the water phase easily separate from each other and need to be mixed by shaking the packaging. To delay phase separation, a gum such as xanthan gum is used at a relatively low concentration.

A need developed with consumers for a salad dressing which does not need emulsifier or gum. Emulsifier and gum often need to be specified on the label, for example with an E-number, and some consumer groups do not prefer to consume ingredients labelled with an E-number. On the other hand, it is desired that the composition is stable over time in terms that it does not phase-separate upon storage, preferably between 6 and 12 months.

### Summary of the invention

Surprisingly, this challenge was met by a food composition in the form of a dispersion, as set out in the appended set of claims.

In a further aspect, the composition relates to a process to manufacture said food composition, the process comprising the steps of:
a) Preparing a water phase comprising mixing modified waxy starch and water, preferably physically modified waxy starch, more preferably physically modified waxy starch selected from the group consisting of corn, potato, rice and mixtures thereof, most preferably physically modified waxy corn starch,
b) Swelling the starch wherein swelling involves heating the starch to a temperature above the gelatinisation temperature of the modified waxy starch, or allowing the starch to swell without a heating step in case the starch is pre-gelled starch,
c) Mixing the composition resulting from step b) with vegetable oil, to achieve a mean droplet size D3.3 of the oil droplets of between 10 and 100 microns as measured using confocal laser scanning microscopy using the protocol in the description, wherein mixing is carried out under high shear.

In a further aspect, the invention relates to the use of modified waxy starch in a food composition comprising water and vegetable oil to provide a phase-stable composition as set out in the appended set of claims.

### Detailed description of the invention

The present invention relates to a food composition in the form of a dispersion comprising water and oil. It was surprisingly found that when modified waxy maize particles are dispersed in the mixture comprising oil and water, the composition is stable against phase separation.

### Oil

The oil is mixed with the water phase. The oil is homogenously distributed in the composition. The oil is not emulsified in the water phase. The oil is present as oil droplets, as it is distributed through the composition. In this way, the oil is dispersed, *i.e.* as droplets, in the water. Without willing to be bound by theory, the stability of the composition is caused by the oil droplets are trapped in a matrix of starch particles. Hence preferably, the oil, in the form of droplets, in the composition of the present invention is physically trapped in a matrix of starch particles.

The oil droplets preferably are on average smaller or of a similar size than the starch granules, preferably both having a mean size of 20 to 50 microns. When waxy corn starch is used, the oil droplets are preferably on average of similar size as the starch granules. When waxy potato starch is used, the oil droplets preferably are on average smaller than the starch granules.

### D3,3

The dispersed oil phase (oil droplets) preferably has a volume averaged geometric mean diameter (D3,3) of more than 10 micron, more preferably of from 20 to 100 microns, even more preferably of from 30 to 70 microns.

The volume averaged geometric mean diameter (D3,3) of the dispersed phase is suitable determined by means of CLSM (confocal laser scanning microscopy).

The oil droplet size can be measured using image analysis upon microscopic analysis, preferably by CLSM. The apparent size of the droplets can be suitably measured using an image analysis program such as e.g. Fiji. It is preferred that at least 90% of the oil droplets have a diameter of more than 10 µm, preferably above 20µm, even more preferably between 20 and 100 µm, even more preferably between 20 and 80 µm, even more preferably between 20 and 60 µm.. The apparent average droplet size is preferably of between 20 and 80 microns, more preferably of between 20 and 60 microns.

The dispersed (non-emulsifier) character of a vinaigrette, is reflected in the droplets being preferably higher than 15 microns. In industrially produced emulsified dressing compositions the droplet size is generally smaller, e.g. about 3 to 10 microns.

The oil is normally a vegetable oil. Preferred oils are an oil selected from the group consisting of canola oil (rape seed oil), soybean oil, olive oil, and mixtures thereof. Oil is present in an amount of from 2 to 60 wt%, more preferably of from 3 to 45 wt%, even more preferably of from 3 to 30 wt%, based on the weight of the composition.

### Water

The composition comprises a water phase. The water phase preferably comprises acids and water and material dissolved therein such as sugar and salt. Acids preferably include acetic acid, citric acid and mixtures thereof, preferably the acid comprises acetic acid. Accordingly, the water phase is preferable formed from added vinegar, optionally acids other than acetic acid, and water and material dissolved therein such as sugar and salt. Herbs and spices are considered part of the water phase. Starch is believed to form a matrix in the water phase, and is for purposes of calculation of the water phase part of the water phase, and not a separate phase. The water phase is preferably 40 to 98 wt%, more preferably from 55 to 97 wt%, more preferably of from 70 to 97 wt% based on the weight of the composition. Water is present in an amount of from 36 to 94 wt%, preferably of from 50 to 93, more preferably of from 64 to 93 wt%, based on the weight of the composition.

### Starch

Starch is dispersed in the composition of the invention, it is not dissolved. Accordingly, the starch is present in the form of starch granules. E.g. due to the effects of the mechanical processing during preparation of the composition, some of the starch may be present in the form of parts of starch granules in swollen form, as the skilled person understands. In the composition of the invention the starch granules, and parts thereof if present, are in a swollen form. The meaning of the word 'starch granule' is known in the art and is a starch unit produced in nature in a plant. As known in the art, normally, each particle in a starch powder is a complete starch granule. A starch granule can consist of amylose and amylopectin starch molecules in crystalline format. Starch molecules themselves consist of linked glucose molecules.

The starch used in the present invention is modified waxy starch, preferably physically modified waxy starch. The modified waxy starch is preferably selected from the group consisting of corn starch, potato starch, rice starch and mixtures thereof. More preferably the starch is modified waxy corn starch, most preferably physically modified waxy corn starch.

Waxy starch has a low amylose content. Amylose is responsible for a phenomenon called jellification, upon heating of starch in an aqueous environment. In such a system, during cooking, the starch granules are opened and amylose leaks from the granules and forms a stable network that provides the water stabilization that can become a solid gel. In the present invention such jellification caused by an amylose network is not desired as the aim is for a pourable salad dressing. Accordingly, the amylose content is preferably of below 5 wt%, more preferably of below 2 wt%, more preferably of below 0.5 wt%, based on the weight of the waxy starch.

The modified waxy starch is present in the form of starch granules comprising amylopectin. Waxy starch comprises amylopectin, preferably in an amount of more than 95 wt%, more preferably more than 98 wt%, even more preferably more than 99.5 wt%, most preferably all starch is amylopectin. Preferably, the modified waxy starch comprises amylopectin in an amount of 98 to 100 wt% based on the weight of the starch. Waxy starch has no or almost no amylose, which resulted in improved pourability of the food composition.

The swollen granules of waxy corn starch, as preferably present in the composition of the invention preferably have a size of from 30 to 40 microns. This size can suitably be determined by light scattering method (Malvern), as known in the art. The particle size of waxy corn starch results in optimal oil-in-water dispersions in the present invention (e.g. compared to potato). Preferably, the waxy starch is predominantly derived from waxy corn, more preferably, the waxy starch is only derived from waxy corn.

The starch is modified starch. Modified starch provides shear stability and shelf life stability of the food composition wherein it is used, e.g. texture stability at low pH and prevention of retrogradation, wherein water leaks out of the starch granules affecting the appearance of the food composition. The modified starch is either physically or chemically modified starch. Chemically modified starches are preferably chemically cross-linked starches, such as e.g. modified with difunctional reagents. Physically modified starch is more preferred, such as temperature-treated starch. Particularly in low pH environments, physically modified starch provides the stability of the composition of the invention over time, *i.e.* long-term stability. The modified waxy starch is preferably physically modified waxy corn starch. The physically-modified starch preferably is thermally-inhibited starch, more preferably thermally-inhibited cook-up starch. Physically modified starch is known in the art, and described for example in US6221420. In the context of the invention, physical modified starch that is heat-treated while having less than 1%, preferably less than 0.5%, residual moisture proved very beneficial, e.g. for long term stability of the composition. Preferably, the temperature used for the heat treatment is more than 100 °C and less than 200 °C, more preferably of between 120 and 180 °C, even more preferably of between 140 and 160 °C. Most preferably the physically modified starch is starch that is temperature treated at a temperature of between 120 and 180 °C while having a residual moisture level of less than 1%. Physically modified starches are for example commercially available from Ingredion, their 'Novation' range, such as for example Prima 300 or Endura 100.

Waxy starches, in particular waxy corn starch, when swollen and present in sufficient amounts, form a short paste structure instead of a gel. A short paste structure is a term known in the art and refers to a paste that, when scooped, does not form long threads. In the context of the invention a pourable texture is preferred.

The starch is gelatinized starch, *i.e.* heated above its gelatinization temperature, but does not form a gel in the food composition upon cooling in the meaning that an amylose-derived gel has formed. It was further observed, that if native non-waxy corn starch is used, the composition is not stable, and water exudates from the composition, resulting in phase separation.

In the system of the invention, the starch granules are heated to obtain the required properties. Upon heating, the starch granules swell to larger dimensions while taking up water. When used in the context of the invention, the swollen starch granules create a specific condition that enables oil droplet suspension, while the composition still remains pourable.

Within the composition, the majority of the swollen starch granules is intact, i.e. they are not fragmented having the contents dissolved in the water phase. Upon heating, the starch granules may open and swell. No gel is formed, because amylopectin does not form a gel. If they are heated too long, the starch granules disintegrate, as known in the art, and the remaining starch matter is not capable to form a stable dispersion of oil droplets in water anymore.

The modified waxy starch can be 'pre-gelled' or 'cook-up' modified waxy starch. These are names commonly used in the art. In pre-gelled starch, the starch has been treated with a heating step, which has been carried out already before application in the composition and the starch is ready to use. This heating step does not refer to the heating step of physical modification. To avoid confusion, the term "pre-gelled" does not mean that the starch is in the form of a gel or will form a gel in use in the composition. Pre-gelled means that the starch has been heated in a watery slurry to above its gelatinization temperature and subsequently dried into a powdery form. This is to obtain an instant, cold water swelling starch. In cook-up starch, the starch granules need to be heated in water to allow swelling and thereby achieve the required properties. Examples of cook-up starch are Thermflo^{™} and Novation Prima 300^{™} or Endura 0100 (Ingredion), examples of pre-gelled starches are: Ultratex-4^{™} and Novation Prima 340^{™}(Ingredion).

Modified waxy starch is present in an amount of from 4 to 9 wt%, more preferably of 4.5 to 7 wt%, most preferably of from 4.5 to 6 wt%, based on the weight of the water in the composition. This is calculated as [wt starch] / [wt. starch + wt. water] x 100%. Preferably physically modified starch is present in an amount of from 4 to 9 wt%, more preferably of 4.5 to 7 wt%, most preferably of from 4.5 to 6 wt%, based on the weight of the water in the composition. More preferably, physically modified starch selected from corn, potato rice and mixtures thereof is present in an amount of from 4 to 9 wt%, more preferably of 4.5 to 7 wt%, most preferably of from 4.5 to 6 wt%, based on the weight of the water in the composition. Even more preferably physically modified waxy corn starch is present in an amount of from 4 to 9 wt%, more preferably of 4.5 to 7 wt%, most preferably of from 4.5 to 6 wt%, based on the weight of the water in the composition. With these amounts a balance is reached between a time-stable homogenous oil-in-water composition which is still well pourable, or scoopable when the higher levels in the range are used.

### Composition

The present invention relates to a food composition in the form of a dispersion comprising water and oil. The dispersion is water-continuous. The composition can be indicated as a water-in-oil dispersion. The oil and starch are dispersed in the water. A dispersion has the meaning known in the art and is understood to be a liquid composition wherein solid or liquid particles are distributed. In contrast to an emulsion, wherein particles are collected at the oil-water surface to dissolve the oil in water and thereby preventing phase separation, in a dispersion of the invention such particles are not responsible for dissolution of oil in water. The composition of the invention is not an emulsion in the sense that an emulsion contains a surface-active component promoting a stable distribution of the discontinuous phase in the continuous phase. Accordingly, the composition is free from surface active components that act as an emulsifier, *i.e.* surface-active emulsifiers, to promote an oil in water emulsion, preferably no emulsifier is present. Emulsifier such as egg, whey protein, plant protein is absent. Egg, an ingredient often used as emulsifier in dressing compositions, is not needed and is absent.

The composition is free from egg-derived emulsifier. The composition is preferably free from free plant protein, *i.e.* outside plant cells and for example isolated, such as pea protein or other legume protein, an emulsifier which is sometimes used in vegan products. Pea protein may cause allergic reactions in some consumer groups. The composition is preferably free from legume protein and egg-derived ingredients. The composition is preferably free from milk protein, more preferably free from whey protein.

The food composition of the invention preferably is a homogenous composition. This is understood as that there are no layers present with different concentrations of oil and water. The ingredients are homogenously distributed through the food composition. Indeed, the composition is phase-stable for a period of at least a month, preferably three months, even more preferably at least 6 months, after preparation of the food composition. It was found that no thickeners are needed to keep the homogenous distribution of the dispersion of oil droplets and waxy starch particles in the water phase. Accordingly, the composition is preferably substantially free, more preferably is free, of gums, such as for example xanthan gum, guar gum, or carob gum. It is preferably free of cellulose. The composition is preferably free from non-modified starch. It is preferably free from gum and non-modified starch.

The composition is preferably liquid or a paste, preferably liquid. Liquid is understood as pourable, e.g. pourable on a salad. A paste is a composition that can be scooped with a spoon and remaining shape stable and without elasticity, *i.e.* deforming upon deformation, *e.g.* such as mayonnaise. The composition therefore is not a gel, in the meaning of being elastic, *i.e.* upon deformation returning to its original shape. The rheological parameters are as follows: The viscosity is preferably of between 800 and 3000 mPa.s, more preferably of between 900 and 2500 mPa.s, most preferably of between 900 and 2000 mPa.s. Viscosity is measured at 20 °C, with a Brookfield viscometer DV-II, a spindle RV#3 at 50rpm.

Preferably the composition according to the invention comprises edible acid. Said acid refers to regular acids typically used in food emulsions. Preferably the amount of added acid is from 0.1 to 10 wt. %, more preferably from 0.5 to 5 wt.% and even more preferably from 1.0 to 2.0 wt. %. The acid is calculated as non-dissociated acid, e.g. HAc. The acid preferably is selected from acetic acid, citric acid, lactic acid, phosphoric acid, and combinations thereof. Acetic acid may be added as a component of vinegar, and citric acid may be added as a component of lemon juice.

Preferably the pH of the composition according to the invention is from 2.5 to 5, more preferably from 3 to 4.2.

In a most preferred form the composition of the invention is a food composition in the form of a dispersion, the composition comprising:
∘ A water phase comprising
∘ water,
∘ Acetic acid, citric acid or both,
∘ 4.5 to 6 wt%, based on the weight of the water in the composition, of physically modified waxy starch selected from the group consisting of corn starch, potato starch, rice starch and mixtures thereof, preferably physically modified waxy corn starch, wherein the modified starch comprises amylopectin in an amount of 98 to 100 wt% based on the weight of the starch,
∘ 3 to 60 wt% of vegetable oil,
   wherein the pH is from 2.5 to 5,
   wherein the composition does not comprise egg derived emulsifier,
   wherein the composition does not contain a gum.

### Process

In a further aspect, the invention relates to a process to prepare the composition of the invention.

The process comprises the steps of:
a) Preparing a water phase, comprising mixing water and modified waxy starch, preferably physically modified waxy starch, more preferably physically modified waxy starch selected from the group consisting of corn, rice, potato and mixture thereof, most preferably physically modified waxy corn starch,
b) Swelling the starch wherein swelling involves heating the starch to a temperature above the gelatinisation temperature of the modified waxy starch, or allowing the starch to swell without a heating step in case the starch is pre-gelled starch,
c) Mixing the composition resulting from step b) with vegetable oil, to achieve a mean droplet size D3.3 of the oil droplets of between 10 and 100 microns as measured using confocal laser scanning microscopy using the protocol in the description, wherein mixing is carried out under high shear.

In a first step a) a water phase is provided, comprising water and modified waxy starch. Preferably also vinegar is added to the water phase, as are salt and sugar.

The aqueous phase may further comprise acid, preferably acetic acid, citric acid or both. The amount of added acid is preferably from 0.1 to 10 wt. %, more preferably from 0.5 to 5 wt.% and even more preferably from 1.0 to 2.0 wt. %. The acid preferably is selected from acetic acid, citric acid, lactic acid, phosphoric acid, and combinations thereof. Acetic acid may be added as a component of vinegar, and citric acid may be added as a component of lemon juice.

The aqueous phase may further comprise taste-providing ingredients such as salt, sugar, herbs and spices. Plant-derived particles, such as for example herbs, spices, fruit particles, and vegetable particles are preferably present in an amount of less than 10 wt% based on the weight of the composition.

Modified waxy starch is mixed with the water, preferably the modified waxy starch is added to the water and then mixed with it. As set out above, the modified waxy starch is preferably modified waxy corn starch, potato starch rice starch or mixtures thereof, more preferably physically modified, and most preferably the starch is physically modified waxy corn starch. The modified waxy starch can be pre-gelled or cook-up modified waxy starch, as explained above.

In step b), the starch is swollen or allowed to swell. Especially if the modified waxy starch is cook-up starch (*i.e.* not pre-gelled), the water phase resulting from step a) is heated to a temperature of above the gelatinisation temperature of the modified waxy starch. The heating step is used to achieve starch functionality. In the heating step, also possible amylases present in the water phase are deactivated and the aqueous phase is pasteurized, which could be considered an advantage. The temperature to which the aqueous starch is heated, *i.e.* above the gelatinization temperature of the starch, is known to the skilled person. This temperature is normally provided with the product sheet when the starch is bought, as it is starch-specific. The temperature normally is between 65 and 95 °C. Accordingly, the aqueous phase comprising the modified waxy starch, preferably cook-up starch, is heated to a temperature of between 65 and 95 °C. hence, in step b) the starch is swollen, wherein swelling of the starch preferably involves heating, especially in case the starch is cook-up starch. It is heated to allow the starch granule to become swollen and thereby become functional. In case of waxy corn starch the granules swell to a diameter of about 30 to 40 microns. The time for which the aqueous phase is heated depends on the temperature, as the skilled person will understand. At relatively low temperatures, a longer heating time is required, whereas as relatively high temperatures, a shorter time is sufficient. The heating regimes (time and temperature) of the starches are known in the art, and provided by supplier or easily determined by a viscograph (e.g. Brabender_E) or Rapid visco analyser (RVA), as known to the skilled person. It is preferred that the heating time is between 10 seconds and 15 minutes, preferably of between 2 minutes and 10 minutes, more preferably of between 3 minutes and 5 minutes. Too long heating will result in a 'collapse' of the starch, as known to the skilled person, and without willing to be bound by theory, caused by the starch granules becoming disintegrated, and in the context of the invention not capable to form a proper dispersion anymore. The heating step is followed by a cooling step, wherein the aqueous phase is allowed to cool, e.g. to ambient temperature.

The skilled person will understand, that pre-gelled starch has already undergone a heating step and no heating step is required. It is already functionalized. It may be preferred that the starch did not undergo freeze-drying, as this is an expensive step. As known to the artisan, it may be preferred that when the starch is pre-gelled starch, the starches are dispersed in oil, or premixed with other dry powders, before being mixed into the water phase. The starch then migrates into the water phase under controlled conditions. In the case of pre-gelled starch, the starch is incubated in oil, preferably for a time period of between 1 and 15 minutes, before it is mixed with the water phase. When in contact with water, the starch swells. Hence, in case the starch is pre-gelled starch, in step c) the starch is allowed to swell.

In step c) the oil is mixed with the water phase. The oil is preferably mixed with the mixture comprising starch and water resulting from step b), *i.e.* containing the functionalized starch, possibly resulting from heating the water phase when cook-up starch is used. The oil can alternatively be added together with the starch, preferably in case the starch is pre-gelled starch. In this case, addition of starch to the water, and step c), mixing of oil with the water phase are carried out at the same time. However, mixing in oil parallel to adding the starch is not preferred. Ideally, the oil is distributed in an established starch network. Mixing of the oil and the water phase is carried out under high shear, such as provided e.g. by mixing with a colloid mill, a rotor-stator device or a turbine mixer. As the texture of the composition does not rely on the presence of an emulsifier, and an emulsifier is preferably absent, high shear mixing is less critical than it is for emulsions. Shear should be sufficient to provide a homogenous mixture. The mean droplet size achieved is preferably above 10 microns, preferably above 15 microns, more preferably of from 20 to 100 microns, even more preferably of between 20 and 80 microns, even more preferably of between 20 and 60 microns and most preferably of between 20 and 40 microns.

In a most preferred process, the process comprises the steps of:
a) Preparing a water phase comprising mixing
   µ water,
   µ acetic acid, citric acid or both,
   µ physical modified waxy corn starch, potato starch, rice starch or mixture thereof, preferably physical modified waxy corn starch, wherein the starch is pre-gelled or cook-up modified waxy starch, and
   wherein said starch is present in an amount of from 4 to 5.5 wt%, based on the weight of the water in the resulting food composition,
b) Swelling the starch, in case the starch is cook-up modified waxy starch, by heating the water phase resulting from step a) to a temperature above the gelatinization temperature of the physically modified waxy starch, to allow swelling of the starch granules, followed by cooling or allowing to cool down to ambient temperature, or allowing the starch to swell in case of a pre-gelled starch,
c) Mixing the composition resulting from step b) with 2 to 60 wt% of vegetable oil, based on the weight of the resulting food composition,
to result in a food composition in the form of a dispersion, having a pH from 2.5 to 5 and being free from egg-derived emulsifier.

### Use

In a further aspect, the present invention relates to the use of modified waxy starch, preferably modified waxy corn starch, preferably physically modified waxy corn starch in a food composition comprising water and oil in the form of a dispersion, wherein the modified waxy starch is dispersed in the composition, to provide a phase-stable composition, as defined in the appended claims. Such a composition is free from emulsifier, such as egg or egg-derived emulsifier. It is preferably free from gum. The starch is preferably present in an amount of from 4 to 9 wt%, preferably of from 4.5 to 7 wt%, more preferably of from 4.5 to 6 wt%, based on the weight of the water in the composition.

### Effect

In the present invention it was found, that when modified waxy starch is present, dispersed in a mixture comprising oil and water, the mixture of oil and water stays homogenously mixed over time. A stable dispersion of oil droplets in the water phase is provided. It is believed that the oil droplets are entrapped in a matrix of starch granules. The composition is preferably stable for at least 1 month, preferably at least 3 months, more preferably at least 6 months, most preferably at least 9 months, and preferably of from 1 to 3 months, more preferably of from 1 to 6 months, more preferably of from 1 to 9 months and most preferably of from 1 to 12 months. It is preferably stable from 6 to 12 months, even more preferably of from 9 to 12 months. "Stable" is understood as that no phase separation of the oil and the water is observed with the naked eye.

The invention is now exemplified with the following, examples.

### Examples

### Example 1

Model system with different inclusion levels of starch on water.

| **Water phase** | | | **Product** | |
|---|---|---|---|---|
| | | | | |
| | | | | |
| **Water** | **to 100%** | | **Water phase** | **70%** |
| **Starch** | **2 - 6.5%** | | **Soy bean oil** | **30%** |
| | **100%** | | | **100%** |
| **pH3.5** | | | | |
| | | | | |

Mixtures of starch and water when prepared. Novation Prima-300 starch (Ingredion) was used in the example. This starch is a physically modified waxy corn starch. The pH of the starch phase was reduced to 3.5 with phosphoric acid for adding micro stability during the period the analyses were performed. The starch phase was heated to 92°C and kept at this temperature for 5 minutes. After cooling down the starch phase to ambient temperature, 171 g of soy bean oil was dispersed into 400 g of the starch phase, while mixing with a Silverson L4RT turbo mixer at 8000 rpm. Mixing time was about 1 minute. The dispersions were filled in glass jars and analyzed after 2 days storage at ambient temperature.

The samples were checked for presence of free moisture in the bottom of the jars. Presence of free moisture indicate insufficient filling grade of the water with starch granules, to achieve the required shelf life stability of the system.

The viscosity of the samples was analyzed by means of a Brookfield DV-II viscometer and additionally with a Bostwick flow meter. Samples with free moisture were stirred with a spoon to obtain a homogeneous mix again, before proceeding with the instrumental analysis.

| Sample | Stability | Brookfield mPa.s | Bostwick cm/30s |
|---|---|---|---|
| 2.0% starch (comparative) | Free water | 40 | Full (24cm) |
| 3.0% starch (comparative) | Free water | 510 | Full (24cm) |
| 4.0% starch | little free water | 850 | 18.5 |
| 5.0% starch | Stable | 1700 | 12.5 |
| 6.0% starch | Stable | 3050 | 9.0 |
| 6.5% starch | Stable | 4150 | 7.3 |

| | | | |
|---|---|---|---|
| Stability: visual check for free moist, 48 hours after production at 20°C Brookfield: 50rpm for 10 seconds, using RV type spindles at 20°C Bostwick: flow advance in cm, noted after 30 seconds at 20°C. | | | |

In the tested system, compositions with less than 4% starch on water showed free moisture and will therefore not be shelf life stable. Starch levels above 5% will compromise pourability of the composition, when used for a salad dressing vinaigrette. They could be suitable for scoopable products though.

### Example 2

Using a similar model system as described under example 1, an additional set of samples were prepared with different types of starch. For this trial, the inclusion level of starch on water was fixed at 4.5% w/w.

| **Water phase** | | | **Product** | |
|---|---|---|---|---|
| | | | | |
| | | | | |
| **Water** | **95.50** | | **Water phase** | **70** |
| **Starch** | **4.50** | | **Soy bean oil** | **30** |
| | **100%** | | | **100%** |
| **pH3.5** | | | | |

The following starches were included in the trial
- Modified waxy Potato starch E1442, Eliane VE580
- Modified waxy Corn starch E1422, Colflo-67
- Physically modified waxy corn starch, Novation Prima-300
- Native Wheat starch, Meritena 200

The preparation and methods for evaluation were identical as described for example 1.

| Sample | Stability | Brookfield mPa.s | Bostwick cm/30s |
|---|---|---|---|
| Waxy Potato E1442 | stable | 1980 | 13.5 |
| Waxy Corn E1422 | stable | 1628 | 14.5 |
| Waxy Corn (Phys) | stable | 1220 | 13.5 |
| Native Wheat (comparative) | stable | 890 | 23.0 |

All modified waxy starches show stable product properties after 24 hours. Viscosity differences can be explained by the effects of starch modification and botanical source. The sample with native wheat starch shown lower viscosity. This is caused by shear sensitivity due the absence of an effective modification. Also, part of the structure with non-waxy starches, comes from the gelling of the amylose part of the starch. This gel is then disrupted by the mechanical shear in the process. Samples with native starches will also not be shelf life stable in these acidic conditions, due to the effects from starch retrogradation. These retrogradation effects however, showed after prolonged storage time (some weeks).

### Example 3

In this example, product samples were prepared using different oil levels. The starch phase composition was fixed and identical to that of Example 2 (95.5% water, 4,5% Prima 300 starch). This series also included the starch phase as such (0% oil) as a reference. The samples were prepared as described under Example 1, though using different ratio of starch phase and oils. The products were filled in jars and 15 ml cone shaped (centrifuge) tubes. The tubes were checked for the presence of free water, 72 hours after production. No free moisture was found in any of the tubes.

Analysis, 72h after production

| Sample (oil content) | Stability | Brookfield mPa.s | Bostwick cm/30s |
|---|---|---|---|
| 0% (comparative) | Stable, no free water | 500 | 18,5 |
| 5% | Stable, no free water | 780 | 17,0 |
| 20% | Stable, no free water | 1250 | 12,5 |
| 25% | Stable, no free water | 1260 | 12,5 |
| 35% | Stable, no free water | 1390 | 13,0 |
| 50% | Stable, no free water | 2100 | 10,5 |

| | | | |
|---|---|---|---|
| Brookfield: 50rpm for 10 seconds, using RV type spindles at 20°C Bostwick: flow advance in cm, noted after 30 seconds at 20°C. | | | |

### Example 4

Basic composition for a dispersed vinaigrette product, using the technology. The present technology allows preparing a phase-stable vinaigrette product that is free from egg or other emulsifier and free of gum or gelled starch which is used in the art to provide a stabilizing gel matrix. Brookfield viscosity, measured one week after production is ±1500 mPa.s (RV spindles, 50 rpm at 20°C). No free water was observed after 6 months of ambient storage. The level of starch on water in this composition is 4.7 wt% based on the weight of total water in the composition.

| | % w/w |
|---|---|
| Water | 53.4 |
| Novation Prima 300 starch | 3.3 |
| Vinegar (8% acid) | 14.0 |
| Salt | 1.5 |
| Sugar | 2.0 |
| Herbs, spices & flavors | 0.8 |
| Vegetable oil | 25.0 |
| Starch level on total water is 4.7% | |

### Example 5

Determination of oil droplet size distribution.

Measurement of oil droplet size distribution in dressing products is often accomplished by methods using laser light scattering. However, the presence of starch granules in the product could interfere with this method, as the size of these particles are expected to be in the similar range as the oil droplets. Therefore, CSLM technology has been used to determine apparent oil droplet size. Confocal Scanning Laser Microscopy uses specific fluorophores to visualize target components in a composition.

### Sample preparation

Approximately 1 gram of sample was stained with a drop of fluorescent dye (1 w/v% aq. Nile Blue). The stained sample was placed on a glass slide that is initially "glowed" to avoid deformation of the oil droplets by electrostatic attraction of these droplets to the glass plate.

### Microscope

Imaging is done using the Leica TCS SP5 confocal microscope in combination with a DMI6000 inverted optical microscope. The following objectives were used:
10x HCX PL APO CS 10.0 NA 0.40 DRY UV, refraction index 1.00
40x HCX PL APO CS 40.0 NA 1.25 OIL UV, refraction index 1.52

### Imaging Protocol

The laser output used is indicated as a percentage of the maximum laser power, which is 100% for the HeNe (633nm) but limited to 25% for the Argon laser line (488nm) .
Nile Blue (NB) Excitation (nm) and Emission (nm)
Sequential imaging with 488nm Argon line, and 633 HeNe laser line;
Channel 1 (green) Exc. 488 at 33% Em. 520-630nm
Channel 2 (red) Exc. 633 at 33% Em. 662-749nm

### Image Analysis

For each sample 25 images were analysed which were acquired at different sample locations. After acquisition, the microscopy images were exported from Leica LIF format to TIF without annotations (no scale-bar). ImageJ V1.51h software (with FIJI distribution) was used for the analyses. A script is used that applies the following steps;
- Convert images to 8bit single channel type
- Median Filter (value 8) to remove noise
- Threshold (Otsu method), which effectively binarises the images.
- Watershed, to separate touching droplets
- Analyze droplet sizes during analysis detected objects are filtered on circularity and only those with circularity values > 0.8 were included to ensure that deformed droplets were not taken into account. The circularity calculation used is; (4π * area)/perimeter2)). Droplets touching the edges are also excluded.

After the analysis step, the acquired surface area of the droplets were used to determine the equivalent diameters, which are calculated according to; r = Sqrt (A/π) and D=2r. The distribution of these diameters was analyzed with JMP software (V11.0.0) resulting in an apparent oil droplet size distribution of the samples.

When the apparent oil droplet size distribution from example 2 product and example 4 product is expressed as D3.3 (volume based mean, according to Maarten Alderliesten, Part. Syst. Charact. 8 (1991) 237-241), this is 56µm and 55µm, respectively.

The oil droplet size is notably bigger than for classic salad dressings, that use surface active emulsifiers. These classic products typically show a mean value (D3.3) of under 15µm.

## Claims

1. A food composition in the form of a dispersion, the composition comprising:
• A water phase comprising water and modified waxy starch,
• 2 to 60 wt% of vegetable oil, dispersed in the water phase,
wherein water is present in an amount of from 36 to 94 wt%, based on the weight of the composition,
wherein the modified waxy starch is present in an amount of from more than 4 up to 9 wt%, based on the weight of the water in the composition,
wherein the starch in the composition is gelatinized modified waxy starch,
wherein the composition does not comprise egg-derived emulsifier,
wherein the composition does not contain a surface-active emulsifier,
wherein the food composition is a salad dressing,
wherein the mean droplet size D3.3 of the oil droplets is of more than 10 and up to 100 microns as measured using confocal laser scanning microscopy using the protocol in the description.

2. Composition according to claim 1, wherein the modified waxy starch is physically modified waxy starch, more preferably physically modified waxy starch selected from the group consisting of corn, rice, potato and mixtures thereof, most preferably physically modified waxy corn starch.

3. Composition according to any one of the preceding claims, wherein the modified waxy starch is present in an amount of from 4.5 to 7 wt%, more preferably of from 4.5 to 6 wt%, based on the weight of the water in the composition.

4. Composition according to any one of the preceding claims, wherein the viscosity at 20 °C, measured with a Brookfield viscometer DV-II and spindle RV#3 at 50rpm is from 800 to 3000 mPa.s, preferably from 900 to 2500 mPa.s.

5. Composition according to any one of the preceding claims, wherein the pH is from 2.5 to 5, preferably from 3 to 4.2.

6. Composition according to any one of the preceding claims, wherein the composition does not contain a gum or non-modified starch.

7. Process to manufacture a food composition according to any one of the preceding claims, the process comprising the steps of:
a) Preparing a water phase comprising water and modified waxy starch, by mixing water and modified waxy starch, preferably physically modified waxy starch, more preferably physically modified waxy starch selected from the group consisting of corn, rice, potato and mixture thereof, most preferably physically modified waxy corn starch,
b) Swelling the starch wherein swelling involves heating the starch to a temperature above the gelatinisation temperature of the modified waxy starch, or allowing the starch to swell without a heating step in case the starch is pre-gelled starch,
c) Mixing the composition resulting from step b) with vegetable oil, to achieve a mean droplet size D3.3 of the oil droplets of between 10 and 100 microns as measured using confocal laser scanning microscopy using the protocol in the description, wherein mixing is carried out under high shear.

8. Process according to claim 7, wherein the heating step is carried out for a period of between 10 seconds and 15 minutes, preferably of from 1 to 10 minutes, more preferably of from 3 to 5 minutes.

9. Process according to any one of the claims 7 or 8, wherein the starch is physical modified starch and physically modified starch is starch that is temperature treated at a temperature of between 120 and 180 °C while having a residual moisture level of less than 1%.

10. Use of modified waxy starch in a food composition comprising water and vegetable oil to provide a phase-stable composition in the form of a dispersion, wherein the modified waxy starch is dispersed in the composition.
wherein the composition comprises:
• A water phase comprising water and the modified waxy starch,
• 2 to 60 wt% of vegetable oil, dispersed in the water phase,
wherein water is present in an amount of from 36 to 94 wt%, based on the weight of the composition,
wherein the modified waxy starch is present in an amount of from more than 4 up to 9 wt%, based on the weight of the water in the composition,
wherein the starch in the composition is gelatinized modified waxy starch,
wherein the composition does not comprise egg-derived emulsifier,
wherein the composition does not contain a surface-active emulsifier,
wherein the food composition is a vinaigrette,
wherein the mean droplet size D3.3 of the oil droplets is of more than 10 and up to 100 microns as measured using confocal laser scanning microscopy using the protocol in the description.

## Patentansprüche

1. Lebensmittelzusammensetzung in Form einer Dispersion, wobei die Zusammensetzung umfasst:
• eine Wasserphase, umfassend Wasser und modifizierte Wachsstärke,
• 2 bis 60 Gew.-% Pflanzenöl, dispergiert in der Wasserphase,
wobei Wasser in einer Menge von 36 bis 94 Gew.-%, bezogen auf das Gewicht der Zusammensetzung, vorliegt,
wobei die modifizierte Wachsstärke in einer Menge von mehr als 4 bis zu 9 Gew.-%, bezogen auf das Gewicht des Wassers in der Zusammensetzung, vorliegt, wobei die Stärke in der Zusammensetzung gelatinierte modifizierte Wachsstärke ist,
wobei die Zusammensetzung keinen Ei-abgeleiteten Emulgator umfasst,
wobei die Zusammensetzung keinen oberflächenaktiven Emulgator enthält,
wobei die Lebensmittelzusammensetzung ein Salatdressing ist,
wobei die durchschnittliche Tröpfchengröße D3.3 der Öltröpfchen mehr als 10 und bis zu 100 µm beträgt, gemessen unter Anwendung von konfokaler Laserscanning-Mikroskopie, unter Anwendung des Protokolls der Beschreibung.

2. Zusammensetzung nach Anspruch 1, wobei die modifizierte Wachsstärke physikalisch modifizierte Wachsstärke ist, bevorzugter physikalisch modifizierte Wachsstärke, ausgewählt aus der Gruppe, bestehend aus Mais, Reis, Kartoffeln und Mischungen davon, höchst bevorzugt physikalisch modifizierte Wachsmaisstärke.

3. Zusammensetzung nach irgendeinem der vorhergehenden Ansprüche, wobei die modifizierte Wachsstärke in einer Menge von 4,5 bis 7 Gew.-%, bevorzugter von 4,5 bis 6 Gew.-%, bezogen auf das Gewicht des Wassers in der Zusammensetzung, vorliegt.

4. Zusammensetzung nach irgendeinem der vorhergehenden Ansprüche, wobei die Viskosität bei 20°C, gemessen mit einem Brookfield-Viskosimeter DV-II und einen Spindel RV#3 bei 50 U/min von 800 bis 3000 mPa.s, vorzugsweise von 900 bis 2500 mPa.s, beträgt.

5. Zusammensetzung nach irgendeinem der vorhergehenden Ansprüche, wobei der pH-Wert von 2,5 bis 5, vorzugsweise von 3 bis 4,2, beträgt.

6. Zusammensetzung nach irgendeinem der vorhergehenden Ansprüche, wobei die Zusammensetzung kein Gummi oder keine nicht-modifizierte Stärke enthält.

7. Verfahren zur Herstellung einer Lebensmittelzusammensetzung nach irgendeinem der vorhergehenden Ansprüche, wobei das Verfahren die Schritte umfasst:
a) Herstellen einer Wasserphase, umfassend Wasser und modifizierte Wachsstärke, durch Mischen von Wasser und von modifizierter Wachsstärke, vorzugsweise von physikalisch modifizierter Wachsstärke, bevorzugter von physikalisch modifizierter Wachsstärke, ausgewählt aus der Gruppe, bestehend aus Mais, Reis, Kartoffel und Mischungen davon, höchst bevorzugt von physikalisch modifizierter Wachsmaisstärke,
b) Quellen der Stärke, wobei das Quellen das Erhitzen der Stärke auf eine Temperatur oberhalb der Gelatinisierungstemperatur der modifizierten Wachsstärke einbezieht oder Quellenlassen der Stärke ohne Erhitzungsschritt in dem Falle, dass die Stärke vorgelatinierte Stärke ist,
c) Mischen der aus dem Schritt b) resultierenden Zusammensetzung mit Pflanzenöl, um eine mittlere Tröpfchengröße D3.3 der Öltröpfchen zwischen 10 und 100 µm zu erreichen, gemessen unter Anwendung der konfokalen Laserscanning-Mikroskopie, unter Anwendung des Protokolls der Beschreibung, wobei das Mischen unter hoher Scherung durchgeführt wird.

8. Verfahren nach Anspruch 7, wobei der Erhitzungsschritt während einer Zeitdauer zwischen 10 Sekunden und 15 Minuten, vorzugsweise von 1 bis 10 Minuten, bevorzugter von 3 bis 5 Minuten, durchgeführt wird.

9. Verfahren nach irgendeinem der Ansprüche 7 oder 8, wobei die Stärke eine physikalisch modifizierte Stärke ist und die physikalisch modifizierte Stärke eine Stärke ist, die bei einer Temperatur zwischen 120 und 180°C wärmebehandelt wird, während sie einen Restfeuchtigkeitsgehalt von weniger als 1% aufweist.

10. Verwendung einer modifizierten Wachsstärke in einer Lebensmittelzusammensetzung, die Wasser und Pflanzenöl enthält, um eine phasenstabile Zusammensetzung in Form einer Dispersion bereitzustellen, wobei die modifizierte Wachsstärke in der Zusammensetzung dispergiert ist,
wobei die Zusammensetzung umfasst:
• eine Wasserphase, die Wasser und die modifizierte Wachsstärke umfasst,
• 2 bis 60 Gew.-% Pflanzenöl, dispergiert in der Wasserphase,
wobei Wasser in einer Menge von 36 bis 94 Gew.-%, bezogen auf das Gewicht der Zusammensetzung, vorliegt,
wobei die modifizierte Wachsstärke in einer Menge von mehr als 4 bis zu 9 Gew.-%, bezogen auf das Gewicht des Wassers in der Zusammensetzung, vorliegt, wobei die Stärke in der Zusammensetzung gelatinierte modifizierte Wachsstärke ist,
wobei die Zusammensetzung keinen Ei-abgeleiteten Emulgator umfasst,
wobei die Zusammensetzung keinen oberflächenaktiven Emulgator enthält,
wobei die Lebensmittelzusammensetzung eine Vinaigrette ist,
wobei die durchschnittliche Tröpfchengröße D3.3 der Öltröpfchen mehr als 10 und bis zu 100 µm beträgt, gemessen unter Anwendung von konfokaler Laserscanning-Mikroskopie, unter Anwendung des Protokolls der Beschreibung.

## Revendications

1. Composition alimentaire dans la forme d'une dispersion, la composition comprenant :
• une phase aqueuse comprenant de l'eau et de l'amidon cireux modifié,
• 2 à 60 % en masse d'huile végétale, dispersée dans la phase aqueuse,
dans laquelle l'eau est présente dans une quantité de 36 à 94 % en masse, sur la base de la masse de la composition,
dans laquelle l'amidon cireux modifié est présent dans une quantité de plus de 4 à 9 % en masse, sur la base de la masse de l'eau dans la composition,
dans laquelle l'amidon dans la composition est de l'amidon cireux modifié gélatinisé,
dans laquelle la composition ne comprend pas d'émulsifiant dérivé de l'œuf,
dans laquelle la composition ne contient pas un émulsifiant actif en surface,
dans laquelle la composition alimentaire est un assaisonnement pour salade,
dans laquelle la taille moyenne de gouttelettes D3.3 des gouttelettes d'huile est de plus de 10 à 100 microns comme mesurée en utilisant une microscopie confocale à balayage laser utilisant le protocole dans la description.

2. Composition selon la revendication 1, dans laquelle l'amidon cireux modifié est de l'amidon cireux physiquement modifié, encore mieux de l'amidon cireux physiquement modifié choisi dans le groupe consistant en maïs, riz, pomme de terre et mélanges de ceux-ci, bien mieux encore de l'amidon de maïs cireux physiquement modifié.

3. Composition selon l'une quelconque des revendications précédentes, dans laquelle l'amidon cireux modifié est présent dans une quantité de 4,5 à 7 % en masse, encore mieux de 4,5 à 6 % en masse, sur la base de la masse de l'eau dans la composition.

4. Composition selon l'une quelconque des revendications précédentes, dans laquelle la viscosité à 20°C, mesurée avec un viscosimètre Brookfield DV-II et une broche RV#3 à 50 tr/min est de 800 à 3 000 mPa.s, de préférence de 900 à 2 500 mPa.s.

5. Composition selon l'une quelconque des revendications précédentes, dans laquelle le pH est de 2,5 à 5, de préférence de 3 à 4,2.

6. Composition selon l'une quelconque des revendications précédentes, dans laquelle la composition ne contient pas une gomme ou de l'amidon non modifié.

7. Procédé pour la fabrication d'une composition alimentaire selon l'une quelconque des revendications précédentes, le procédé comprenant les étapes de :
a) préparation d'une phase aqueuse comprenant de l'eau et de l'amidon cireux modifié, en mélangeant de l'eau et de l'amidon cireux modifié, de préférence de l'amidon cireux physiquement modifié, encore mieux de l'amidon cireux physiquement modifié choisi dans le groupe consistant en maïs, riz, pomme de terre et mélanges de ceux-ci, bien mieux encore de l'amidon de maïs cireux physiquement modifié,
b) gonflement de l'amidon dans lequel le gonflement implique le chauffage de l'amidon à une température supérieure à la température de gélatinisation de l'amidon cireux modifié, ou laisser l'amidon gonfler sans étape de chauffage dans le cas où l'amidon est de l'amidon pré-gélifié,
c) mélange de la composition résultant de l'étape b) avec de l'huile végétale, pour atteindre une taille moyenne de gouttelettes D3.3 des gouttelettes d'huile de 10 à 100 microns comme mesurée en utilisant une microscopie confocale à balayage laser utilisant le protocole dans la description, dans lequel le mélange est réalisé sous cisaillement élevé.

8. Procédé selon la revendication 7, dans lequel l'étape de chauffage est réalisée sur une période de 10 secondes à 15 minutes, de préférence de 1 à 10 minutes, encore mieux de 3 à 5 minutes.

9. Procédé selon l'une quelconque des revendications 7 ou 8, dans lequel l'amidon est de l'amidon physiquement modifié et l'amidon physiquement modifié est de l'amidon qui est traité en température à une température de 120 à 180°C tout en présentant une teneur en humidité résiduelle inférieure à 1 %.

10. Utilisation d'amidon cireux modifié dans une composition alimentaire comprenant de l'eau et de l'huile végétale pour fournir une composition stable en phase dans la forme d'une dispersion, dans laquelle l'amidon cireux modifié est dispersé dans la composition,
dans laquelle la composition comprend :
• une phase aqueuse comprenant de l'eau et de l'amidon cireux modifié,
• 2 à 60 % en masse d'huile végétale, dispersée dans la phase aqueuse,
dans laquelle l'eau est présente dans une quantité de 36 à 94 % en masse, sur la base de la masse de la composition,
dans laquelle l'amidon cireux modifié est présent dans une quantité de plus de 4 à 9 % en masse, sur la base de la masse de l'eau dans la composition,
dans laquelle l'amidon dans la composition est de l'amidon cireux modifié gélatinisé,
dans laquelle la composition ne comprend pas d'émulsifiant dérivé de l'œuf,
dans laquelle la composition ne contient pas un émulsifiant actif en surface,
dans laquelle la composition alimentaire est un assaisonnement pour salade,
dans laquelle la taille moyenne de gouttelettes D3.3 des gouttelettes d'huile est de plus de 10 à 100 microns comme mesurée en utilisant une microscopie confocale à balayage laser utilisant le protocole dans la description.
